# FASCICULE DE BREVET EUROPEEN

(11) **EP 2 274 701 B1**
(45) Date de publication et mention de la délivrance du brevet: **04.01.2017**
(21) Numéro de dépôt: 09742278.6
(22) Date de dépôt: 08.04.2009
(51) Int. Cl.: G06F 21/53, G06F 21/78

(54) **SYSTEME ET PROCEDE DE SECURISATION D'UN ORDINATEUR COMPORTANT UN MICRONOYAU**
SYSTEM UND VERFAHREN ZUR SICHERUNG EINES COMPUTERS MIT EINEM MIKROKERN
SYSTEM AND METHOD FOR SECURING A COMPUTER COMPRISING A MICROCORE

(30) Priorité: 08.04.2008 FR 0852336
(43) Date de publication de la demande: 19.01.2011
(60) Demande divisionnaire: 16193392.4
(73) Titulaire: Airbus DS SAS, 78990 Elancourt (FR)
(72) Inventeur: CLERMONT, Nicolas, 78120 Rambouillet (FR); HAUGUET, Francis, F-78180 Montigny Le Bretonneux (FR); MEIER, Guillaume, F-75015 Paris (FR)
(74) Mandataire: Lebkiri, Alexandre
(86) Numéro de dépôt international: PCT/FR2009/050623
(87) Numéro de publication internationale: WO 2009/136080

(56) Documents cités:
- WO-A-2007/050797
- US-A1- 2006 256 105
- US-A1- 2006 294 517
- FRASER K ET AL: "Safe Hardware Access with the Xen Virtual Machine Monitor" INTERNET CITATION, [Online] XP002370809 Extrait de l'Internet: URL:http://www.cl.cam.ac.uk/~akw27/papers/ safehw-oasis04-final.pdf> [extrait le 2006-03-07]
- BARHAM P ET AL: "Xen and the Art of Virtualization" PROCEEDINGS OF THE ACM SYMPOSIUM ON OPERATING SYSTEMS PRINCIPLES, XX, XX, 1 octobre 2003 (2003-10-01), pages 164-177, XP002298786
- XIAOQI LU, SCOTT F. SMITH: "A microkernel virtual machine: Building security with clear interfaces" CONFERENCE ON PROGRAMMING LANGUAGE DESIGN AND IMPLEMENTATION; PROCEEDINGS OF THE 2006 WORKSHOP ON PROGRAMMING LANGUAGES AND ANALYSIS FOR SECURITY, 2006, pages 47-56, XP002510783 Ottawa,Ontario,Canada
- GERNOT HEISER (OPEN KERNEL LABS ET AL: "TECHNOLOGY WHITE PAPER. Virtualization for Embedded Systems", INTERNET CITATION, 27 November 2007 (2007-11-27), page 30pp, XP007908697, Retrieved from the Internet: URL:http://www.ok-labs.com/_assets/downloa d_library/OK_Virtualization_WP.pdf [retrieved on 2009-06-03]

## Description

La présente invention concerne un système et un procédé de sécurisation d'un ordinateur comportant un micronoyau. Elle concerne également un produit programme d'ordinateur mettant en oeuvre le procédé.

Les systèmes d'exploitation classiques tels que Microsoft Windows, GNU/Linux ou autre n'ont pas été conçus avec des contraintes fortes de sécurité. Le résultat est une conception faiblement sécurisée sous forme d'un système d'exploitation en deux couches : la première couche est composée du noyau exécuté dans un mode privilégié et la seconde couche des applications qui sont exécutées dans un mode sans privilège appelé mode utilisateur. Le noyau est typiquement un noyau monolithique, même si une approche modulaire est choisie pour gérer en particulier toutes les ressources offertes par le système d'exploitation. Le noyau inclut les logiciels de bas niveau tels que l'ordonnanceur, le gestionnaire de processus, le gestionnaire de mémoire ainsi que les pilotes des périphériques et quelques services de haut niveau tels que les systèmes de fichier, les piles réseau, les algorithmes cryptographiques, etc.

En conséquence, le noyau comporte des millions de lignes de code avec un nombre proportionnel de bogues et de défauts de sécurité. Il ne peut donc pas être vérifié comme étant conforme aux spécifications avec les vérificateurs de codes et les systèmes de preuve formelle actuels. De plus, ils ont de mauvaises propriétés d'isolement. En fait, les processus utilisateur peuvent casser l'isolement de différentes façons grâce aux tubes, aux fichiers, à la mémoire partagée, etc. La gestion des communications interprocessus n'est pas fiable. De plus, il n'existe pas d'isolement à l'intérieur du noyau, entre sous-systèmes du noyau comme, par exemple, entre les pilotes et les piles réseau. Ainsi, un pilote d'un composant matériel bogué ou corrompu peut mettre en danger tout le système.

Comme les risques de sécurité augmentent, les concepteurs de noyau ont essayé de sécuriser les noyaux existants en ajoutant des gestionnaires d'accès obligatoire (Mandatory Access Control - MAC) avec une petite granularité pour implémenter le concept de « Reference Monitor », ou Moniteur de Référence. En fait, les systèmes d'exploitation actuels implémentent généralement une Gestion d'Accès Discrétionnaire (Discretionary Access Control - DAC) qui ne peut pas résoudre le problème générique du code malicieux, spécialement des virus. Des exemples d'amélioration sécuritaire de système d'exploitation sont SELinux, GRSecurity, AppArmor, RSBAC, SEBSD, etc.

Cependant, ces implémentations ne remplissent pas les conditions du Moniteur de Référence car les fonctions sécuritaires faisant partie du noyau ne sont pas protégées et sont inutilisables à l'intérieur du domaine du noyau : elles n'offrent aucune protection entre sous-systèmes du noyau. De plus, comme ces noyaux gèrent l'ensemble des ressources du système, il est difficile d'écrire une politique de sécurité et le résultat est complexe en termes de configuration et de gestion, ce qui rend la vérification formelle impossible.

Toutes ces faiblesses ne permettent pas une vérification formelle de la protection offerte par ces systèmes d'exploitation et engendrent une quantité de menaces sécuritaires qui limitent l'utilisation de ces systèmes dans les environnements ayant une grande exigence sécuritaire. De plus, l'espace mémoire du noyau est partagé entre tous les processus, avec tous les sous-systèmes, même si ceux-ci appartiennent à des niveaux de sécurité différents. En conséquence, les systèmes d'exploitation actuels n'offrent pas un environnement sain et sécurisé.

En réaction à la complexité des noyaux monolithiques actuels, des chercheurs ont proposé le concept de micronoyau qui se caractérise par le déplacement d'un maximum de services à l'extérieur du noyau, dans l'espace utilisateur. Ces fonctionnalités sont alors fournies par de petits serveurs indépendants possédant leur propre espace d'adressage.

Le micronoyau se limite ainsi à quelques fonctions de base dont la gestion des communications entre les serveurs qui sont réalisées par transfert de message (IPC-Inter Process Communication). En plus de cette gestion, un micronoyau comprend un pilote d'horloge et un ordonnanceur.

Ainsi, alors qu'un noyau monolithique traditionnel comporte plusieurs millions de lignes de code, un micronoyau comporte en général moins de 20 000 lignes de code.

On conçoit alors l'attrait des concepteurs de système sécurisé pour les micronoyaux puisqu'ils ont une taille qui permet de les maintenir facilement et ils peuvent être vérifiés formellement. Ils peuvent ainsi être certifiés au niveau le plus haut, EAL7, des Critères Communs.

Un des micronoyaux les plus connus et utilisés actuellement dans différentes variantes, est le micronoyau L4 conçu et implémenté par Jochen Liedtke.

Cependant, à côté du micronoyau lui-même, il devient nécessaire de développer les serveurs nécessaires pour que le système offre les fonctionnalités attendues d'un système d'exploitation moderne.

Aussi, pour éviter la réécriture complète d'un système d'exploitation, il a été proposé d'utiliser le micronoyau comme base d'un hyperviseur de virtualisation sur lequel s'exécute un ou plusieurs systèmes d'exploitation traditionnels. En effet un micronoyau et l'ensemble des serveurs gestionnaires nécessaires au partitionnement des ressources remplissent nativement la fonction d'hyperviseur, à savoir le partitionnement des ressources disponibles entre les machines virtuelles et l'émulation d'évènements matériels (ils ne comportent pas les pilotes de périphériques, seulement des bus systèmes non-partageables), offrant ainsi une technologie de virtualisation native performante, dite de niveau « système »

C'est ainsi que le projet L4 Linux de l'Université de Dresde (Allemagne) a porté le noyau Linux sur le micronoyau L4/Fiasco et sa couche de services, créant ainsi un LINUX (para) virtualisé s'exécutant au-dessus d'un hyperviseur, dans un mode totalement non privilégié, en mode utilisateur.

En termes de sécurité, un tel système bénéficie de la solidité du micronoyau. Cependant, la sécurité des serveurs dépend également de la solidité des communications IPC car c'est un moyen possible de transmission de données dangereuses. Or, pour des raisons d'efficacité, la gestion de la sécurité des communications est traditionnellement laissée au niveau des serveurs, le micronoyau se contentant de transmettre les messages. Le micronoyau peut cependant offrir un mécanisme de droits de communication ; deux tâches ne peuvent communiquer entre elles que si elles possèdent les droits appropriés. Dans le cas contraire, la communication est redirigée vers un serveur spécifique de contrôle des communications qui autorisera ou non la communication *on-the-fly,* en fonction de la politique de sécurité.

De plus, les architectures de micronoyau actuelles sont telles qu'une politique de sécurité est « câblée » dans les règles d'accès du micronoyau de telle sorte que, même dans un contexte de virtualisation avec plusieurs machines virtuelles, elles présentent toutes la même politique de sécurité.

Ainsi, il serait particulièrement avantageux d'avoir une architecture de micronoyau sécurisé qui permet un bon contrôle des accès des machines virtuelles ainsi qu'une granularité et une souplesse dans la mise en oeuvre d'une ou de plusieurs politiques de sécurité sur un même système.

Le document GERNOT HEISER (OPEN KERNEL LABS ET AL: "TECHNOLOGY WHITE PAPER. Virtualization for Embedded Systems", INTERNET CITATION, 27 novembre 2007 (2007-11-27), page 3Opp, XP007908697, divulgue un procédé de sécurisation d'un ordinateur comportant un micronoyau ("OKL4") et des moyens d'interface avec au moins un système d'exploitation ("OK Linux").

Selon un premier aspect de l'invention, il est proposé un procédé de sécurisation d'un ordinateur selon la revendication 1.

Selon d'autres caractéristiques et mode de réalisation, les moyens externes comportent des moyens de stockage de données cryptographiques secrètes et en ce que toute transmission de données cryptographiques secrètes est sécurisée avant stockage.

Selon un deuxième aspect de l'invention, l'invention concerne aussi un produit programme d'ordinateur selon la revendication 8.

Selon un troisième aspect, il est en outre proposé un ordinateur selon la revendication 9.

L'invention sera mieux comprise à la lecture de la description qui suit, donnée uniquement à titre d'exemple, et faite en référence aux dessins en annexe dans lesquels :
- la figure 1 est une vue schématique des couches logicielles d'un ordinateur comportant un logiciel de virtualisation ; et
- la figure 2 est un ordinogramme d'un procédé de sécurisation selon un mode de réalisation de l'invention.

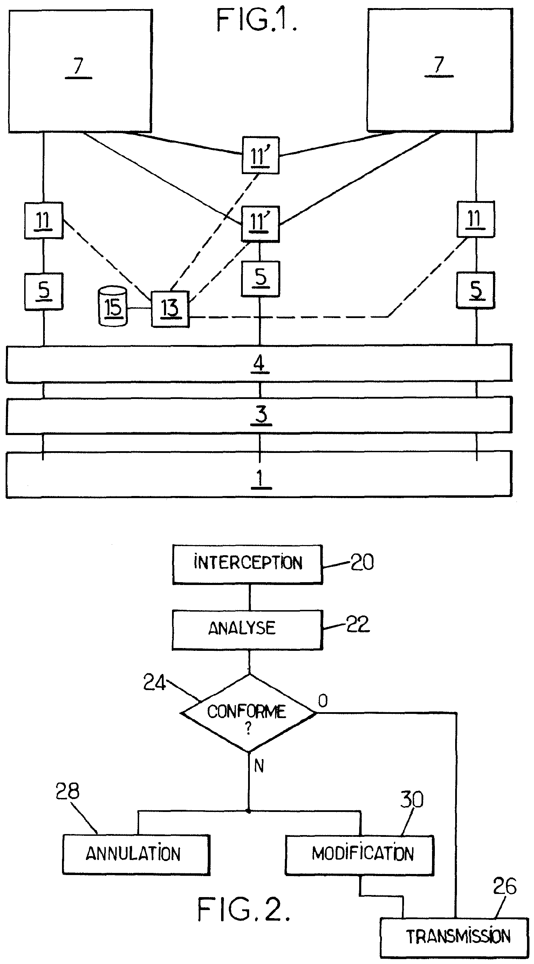

En référence à la figure 1, un ordinateur comporte classiquement, au-dessus du matériel représenté symboliquement par la couche 1, un micronoyau 3. Ce micronoyau 3 gère une partie du matériel directement, à savoir le processeur, les contrôleurs mémoires, le contrôleur d'interruption et le pilote de l'horloge. Au dessus du micronoyau 3 s'exécute les différents serveurs gestionnaires de ressources, symbolisés par la couche 4, chacun ayant à sa charge la gestion d'un sous ensemble d'objets noyaux d'un type donné. Pour atteindre le niveau de sécurité maximum, on affecte un serveur gestionnaire d'un type de ressource par domaine de sécurité (par exemple un gestionnaire de mémoire physique par niveau, chacun possédant des zones mémoires distinctes). Les serveurs gestionnaires 4 exposent à des systèmes d'exploitation virtualisés 7 une interface permettant l'accès aux ressources gérées. Des pilotes de périphérique 5 ont à leur charge la gestion d'un périphérique et sont intimement liés à un médiateur d'accès 11, 11'. Le médiateur 11' est chargé de multiplexer les accès au périphérique entre plusieurs systèmes concurrent, tandis que les médiateurs 11 sont chargés d'appliquer des traitements spécifiques à chaque système (chiffrement, ...). Particulièrement, les médiateurs 11, 11' exposent au système d'exploitation virtualisé 7 un périphérique virtuel. L'ensemble des interfaces exposées par les médiateurs d'une part et les gestionnaires de ressources d'autre part constitue une « machine virtuelle ». Les médiateurs 11, 11' comportent des règles de sécurité définies dans un module 13 de gestion de politique de sécurité et stockées dans des moyens de stockage 15.

Dans cette description, on donne un sens large au terme système d'exploitation qui comprend un système d'exploitation per se tel que le système d'exploitation Windows de Microsoft Inc. ou le système Linux, ainsi que l'ensemble des applications qui s'exécutent sur ce système d'exploitation.

Dans le mode de réalisation décrit, le système d'exploitation 7 est enfermé dans une « cage » constituée par la machine virtuelle et en particulier les médiateurs 11, 11'. Ainsi, par exemple, toute requête d'affichage du système d'exploitation 7 passe au travers d'un médiateur d'affichage. De même, les flux réseau passent au travers d'un médiateur réseau, etc.

Les médiateurs 11, 11' sont reliés aux pilotes 5 de périphérique correspondants en charge classiquement du contrôle du matériel.

Le fonctionnement est alors le suivant, figure 2.

Chaque fois qu'a lieu une transmission d'information entre le système d'exploitation 7 et un pilote 5 ou un autre élément externe au système d'exploitation 7, le médiateur 11, 11' correspondant intercepte le flux d'information, étape 20.

Puis, ce flux est analysé, étape 22, en fonction de règles d'accès prédéfinies. Si le flux est conforme, étape 24, à ces règles, il est transmis en 26 normalement à son destinataire.

Par contre, si ce flux n'est pas conforme à au moins une des règles, il est annulé, étape 28, c'est-à-dire que le destinataire ne reçoit pas le flux et l'émetteur reçoit, éventuellement, un message d'erreur de transmission, ou bien il est modifié en 30 avant d'être transmis en 26 au destinataire. La modification a pour fonction de rendre le flux valide par rapport à la ou les règles violées par le flux dans son état initial.

Plusieurs types de médiateurs peuvent être définis en fonction du type de filtrage et/ou de composant matériel associé.

Par exemple, un premier type de médiateur est défini pour les ressources matérielles partagées par plusieurs systèmes d'exploitation, chacun desdits systèmes étant exécuté dans une « cage » virtuelle. Par exemple, une machine possède en général une seule carte réseau. Il est alors nécessaire de partager son utilisation entre les différents systèmes d'exploitation virtualisés pour donner à chacun accès au réseau.

Ainsi, un pilote est défini dans la couche de virtualisation constituée du micronoyau et des serveurs gestionnaires et le médiateur correspondant contrôle tous les accès. Dans le cas de la carte réseau, chaque système d'exploitation reçoit sa propre adresse MAC via le médiateur. Ainsi, un paquet de données entrant sur l'interface physique est géré par le pilote. Le médiateur de la carte réseau agit comme un pont virtuel en transmettant le paquet au bon système d'exploitation. Il est également possible de s'assurer que les paquets sortants ne sont pas trafiqués par le système d'exploitation, par exemple, en modifiant l'adresse MAC source.

Un autre exemple concerne l'accès aux disques. Par exemple, si le système d'exploitation virtualisé a reçu comme espace de stockage la première partition du premier disque, les accès aux autres partitions seront rejetées par le médiateur lié au pilote de stockage.

De façon classique, la communication entre deux systèmes d'exploitation virtualisés sur une même machine est réalisée par l'intermédiaire d'un accès réseau virtuel totalement géré par le logiciel de virtualisation. Ainsi chaque système d'exploitation transmet de l'information à l'autre comme si le second système d'exploitation se trouvait sur une machine différente reliée par un réseau de données.

Un second type de médiateur est associé à ces périphériques réseau virtuels pour s'assurer que seules des communications autorisées sont possibles. Le médiateur joue alors, suivant la politique de sécurité établie, le rôle de pare-feu en bloquant du trafic non autorisé, ou bien, chiffre les communications pour les transmettre à un système d'exploitation fonctionnant avec un autre niveau de sécurité.

Un troisième type de médiateur prend en charge des fonctions cryptographiques en évitant l'exposition de secrets dans un environnement non sécurisé. Ainsi, il est possible d'éviter de confier à un autre système d'exploitation non sécurisé des opérations sensibles.

Par exemple, des données sensibles devant être stockées seulement de façon chiffrée, sont transmises par le système d'exploitation au pilote de stockage pour qu'elles soient écrites sur un disque dur. Le médiateur correspondant intercepte la transmission des données, les chiffre avec une clé connue de lui seul et les transmet chiffrées au pilote de stockage. Ainsi, la clé de chiffrage n'est jamais « exposée » au système d'exploitation non sécurisé.

Les médiateurs permettent avantageusement de définir un niveau de sécurité pour chaque système d'exploitation.

Comme le micronoyau associé aux médiateurs est beaucoup moins complexe qu'un système d'exploitation, il est plus facile d'écrire un logiciel de virtualisation sûr et pouvant être prouvé comme correct.

Ainsi, l'isolation de chaque système d'exploitation sur sa machine virtuelle avec le niveau de sécurité adéquat permet d'obtenir une sécurisation au moins égale à celle obtenue en utilisant des machines séparées.

De plus, il est possible de définir une politique de sécurité en définissant les actions et communication autorisées pour chaque niveau de sécurité. Cela inclut l'attribution d'un dispositif, l'utilisation d'une ressource partagée, les communications autorisées, les contraintes pour exporter/importer des données du domaine de protection associé.

Par la centralisation de la gestion de la politique de sécurité dans un module spécifique et par la décentralisation au niveau de chaque médiateur de la mise en oeuvre de ces règles, il est ainsi possible de garantir l'obtention d'un niveau de sécurité cohérent et évolutif.

En effet, la politique de sécurité est mise en oeuvre par les médiateurs via les règles de sécurité. Il est donc possible d'avoir des politiques dynamiques par diffusion aux médiateurs de nouvelles règles par exemple, pour contrer une attaque spécifique, et sans affecter les autres niveaux de sécurité.

On comprend qu'une utilisation extensive des médiateurs permet de « mettre en cage » les systèmes d'exploitation virtualisés. En effet, en installant un médiateur sur chaque point de connexion, tous les flux d'information, entrants comme sortants, sont filtrés par les médiateurs. Ainsi, comme les médiateurs sont des logiciels sûrs qui appliquent une politique de sécurité, un système d'exploitation virtualisé ne peut rien faire d'autre que ce qui est spécifié dans la politique de sécurité. Sinon, l'opération est rejetée.

Cela permet d'exécuter les systèmes d'exploitation sans privilège particulier, en particulier sans privilège d'Entrée/Sortie ou d'instructions.

De plus, la « mise en cage » est transparente pour le système d'exploitation virtualisé car il ne peut pas faire la différence entre un flux provenant d'un médiateur et un flux provenant d'un dispositif matériel. Cela permet des traitements additionnels de sécurité sur les flux pour protéger des données du système d'exploitation sans l'impliquer. Par exemple, un médiateur d'antivirus peut scanner le contenu d'une clé USB avant de la monter sur le système d'exploitation.

Les médiateurs peuvent être enchainés les uns aux autres ce qui permet avantageusement d'exécuter plusieurs opérations sur un flux.

Par exemple, pour écrire sur la clé USB, il est possible d'enchainer un médiateur antivirus puis un médiateur de chiffrement.

Ainsi, il est possible d'obtenir avantageusement une sécurité physique en protégeant des données sensibles appartenant à différents domaines de sécurité sur un même support physique.

Un autre avantage est que la protection s'applique sans avoir à modifier ou à impliquer le système d'exploitation, que ce soit pour la protection comme pour la configuration. Ainsi, le système d'exploitation virtualisé devient sans besoin de configuration pour la sécurité, la configuration de celle-ci étant assurée par les politiques de sécurité mises en oeuvre par les médiateurs.

Le système d'exploitation est configuré au démarrage par les médiateurs qui déterminent les règles d'accès et mettent en oeuvre la politique au fil de l'exécution.

En effet, la politique de sécurité peut être structurée selon des règles par classe de médiateurs, ce qui a l'avantage de permettre une grande modularité : l'implémentation d'une classe de médiateurs particulière est remplaçable sans avoir à réécrire l'ensemble de la politique de sécurité, seules les règles relatives à une classe particulière doivent être réécrites. De la même façon des modifications peuvent être faites dynamiquement, c'est-à-dire pendant le temps d'exécution, seulement sur des médiateurs spécifiques, concernant seulement des domaines spécifiques sans impacter la protection des autres interfaces ou domaines.

Ainsi, l'administration de la plateforme écrit des règles d'accès pour chaque médiateur, spécifiant les clients autorisés, et les ressources allouées ainsi que les actions associées. Tous les fichiers de configuration des médiateurs sont alors réunis dans un seul fichier de politique de sécurité. Pour démarrer un nouveau système d'exploitation virtuel, ou domaine, le chargeur commence par rechercher dans ce fichier les médiateurs qui ont ce domaine comme client, puis il n'autorise les communications de ce domaine qu'avec ces médiateurs.

Le système d'exploitation ne peut pas outrepasser les médiateurs et donc la politique de sécurité. Puis les médiateurs appliquent indépendamment les uns des autres les règles d'accès définies pour ce domaine sur ces objets.

On comprend que différentes variantes sont réalisables à partir de cette description.

## Revendications

1. Procédé de sécurisation d'un ordinateur comportant un micronoyau (3), au moins un système d'exploitation (7) virtualisé, une pluralité de pilotes de périphérique (5) et au moins un médiateur d'accès (11) filtrant le flux d'information associé à chaque pilote de périphérique (5) et exposant audit système d'exploitation virtualisé un périphérique virtuel, ledit micronoyau comportant un pilote d'horloge, un ordonnanceur et un gestionnaire de communication interprocessus, au moins une machine virtuelle, associée à chaque système d'exploitation, étant formée par ledit noyau, des gestionnaires de ressources, les pilotes de périphérique (5) et les médiateurs d'accès (11), , **caractérisé en ce que** le procédé comporte, au niveau des médiateurs d'accès (11), les étapes de :
- interception (20) de toute communication entre un des pilotes de périphériques et ledit système d'exploitation virtualisé,
- vérification (24) que la communication interceptée est conforme à des règles d'accès prédéfinies pour ledit système d'exploitation virtualisé ;
- transmission (26) de la communication interceptée au destinataire si la communication interceptée est conforme aux règles d'accès prédéfinies,
et **en ce que** chaque système d'exploitation virtualisé n'est autorisé, au démarrage, à communiquer qu'avec les médiateurs qui ont ce système d'exploitation comme client.

2. Procédé selon la revendication 1, **caractérisé en ce qu'**au démarrage de chaque système d'exploitation, un chargeur recherche, dans un fichier unique de politique de sécurité comprenant tous les fichiers de configuration des médiateurs, les médiateurs qui ont ledit système d'exploitation comme client.

3. Procédé selon la revendication 1 ou 2, **caractérisé en ce que** l'ordinateur comportant une pluralité de systèmes d'exploitation virtualisés chacun isolé sur sa machine virtuelle, le procédé comporte une étape de multiplexage, par un des médiateurs d'accès, des accès par les systèmes d'exploitation virtualisés à un des pilotes de périphériques associé.

4. Procédé selon l'une des revendications 1 à 3, **caractérisé en ce que** des moyens externes comportent des moyens de stockage de données cryptographiques secrètes et **en ce que** toute transmission de données cryptographiques secrètes est sécurisée avant stockage.

5. Procédé selon l'une des revendications 1 à 4 dans lequel, le micronoyau et au moins deux pilotes de périphériques formant au moins deux machines virtuelles dans chacune desquelles s'exécute un unique système d'exploitation, au moins un médiateur d'accès additionnel (11') permet une communication entre les systèmes d'exploitation et vérifie la conformité desdites communications par rapport à des règles de sécurité d'accès.

6. Procédé selon l'une quelconque des revendications 1 à 5, dans lequel, pour chaque système d'exploitation, dans une étape préalable, une politique de sécurité est définie sous la forme d'un jeu de règles d'accès pour les médiateurs en relation avec ledit système d'exploitation.

7. Procédé selon la revendication 6, dans lequel les règles d'accès associées à la politique de sécurité dudit système d'exploitation sont fournies aux médiateurs d'accès avant le démarrage dudit système d'exploitation.

8. Produit programme d'ordinateur comprenant des instructions de code de programme enregistrées sur un support lisible par un ordinateur pour mettre en oeuvre les étapes du procédé selon l'une quelconque des revendications 1 à 7 lorsque ledit programme fonctionne sur un ordinateur.

9. Ordinateur comportant :
- un micronoyau (3) comportant un pilote d'horloge, un ordonnanceur et un gestionnaire de communication interprocessus,
- au moins un système d'exploitation virtualisé (7),
- une pluralité de pilotes de périphériques (5) ;
- des gestionnaires de ressources,
**caractérisé en ce qu'**il comprend au moins un médiateur d'accès (11) associé à chaque pilote de périphérique et couplé au système d'exploitation virtualisé pour former au moins une machine virtuelle associée à chaque système d'exploitation virtualisé permettant l'exécution de celui-ci,
chacun des médiateurs d'accès (11, 11') étant adapté pour filtrer le flux d'information associé à chaque pilote de périphérique (5) et exposant au système d'exploitation virtualisé un périphérique virtuel en interceptant toute communication entre le pilote de périphérique correspondant et le système d'exploitation virtualisé, et ne transmettre ladite communication interceptée que si des règles de sécurité d'accès au pilote de périphérique spécifiques à chaque système d'exploitation virtualisé sont validées par ladite communication interceptée, chaque système d'exploitation virtualisé n'étant autorisé, au démarrage, à communiquer qu'avec les médiateurs qui ont ce système d'exploitation comme client.

10. Ordinateur selon la revendication 9, **caractérisé en ce qu'**au démarrage de chaque système d'exploitation, un chargeur recherche, dans un fichier unique de politique de sécurité comprenant tous les fichiers de configuration des médiateurs, les médiateurs qui ont ledit système d'exploitation comme client.

## Patentansprüche

1. Sicherungsverfahren eines Computers, umfassend einen Mikrokern (3), wenigstens ein virtualisiertes Betriebssystem (7), eine Vielzahl von Peripheriegerättreibern (5) und wenigstens ein Zugangstor (11), das den Informationsstrom filtert, der jedem Peripheriegerättreiber (5) zugeordnet ist und das genannte virtualisierte Betriebssystem mit einem virtuellen Peripheriegerät in Kontakt bringt, wobei der genannte Mikrokern einen Taktgebertreiber, einen Scheduler und eine Kommunikationsverwaltung zwischen Prozessen umfasst, wobei wenigstens eine virtuelle Maschine, die jedem Betriebssystem zugeordnet ist, durch den genannten Kern, Ressourcenverwaltungen, die Peripheriegerättreiber (5) und die Zugangstore (11) gebildet ist, **dadurch gekennzeichnet, dass** das Verfahren an den Zugangstoren (11) die Stufen umfasst:
- Abfangen (20) jeder Kommunikation zwischen einem der Peripheriegerätetreiber und dem genannten virtualisierten System;
- Überprüfung (24), dass die abgefangene Kommunikation den Zugangsregeln entspricht, die für das genannte virtualisierte Betriebssystem vordefiniert sind:
- Übertragung (26) der abgefangenen Kommunikation auf den Empfänger, wenn die abgefangene Kommunikation den vordefinierten Zugangsregeln entspricht,
und dadurch, dass jedes virtualisierte Betriebssystem beim Starten zur Kommunikation nur mit den Toren zugelassen ist, die dieses Betriebssystem als Client haben.

2. Verfahren gemäß Anspruch 1, **dadurch gekennzeichnet, dass** beim Starten jedes Betriebssystems ein Ladegerät in einer einzigen Datei der Sicherheitspolitik, die alle Konfigurationsdateien der Tore umfasst, die Tore sucht, die das genannte Betriebssystem als Client haben.

3. Verfahren gemäß Anspruch 1 oder 2, **dadurch gekennzeichnet, dass** der Computer eine Vielzahl von virtualisierten Betriebssystemen umfasst, die jeweils auf ihrer virtuellen Maschine isoliert sind, das Verfahren eine Multiplexingstufe der Zugänge durch die virtualisierten Betriebssysteme durch eines der Zugangstore zu einem der zugeordneten Peripheriegerätetreiber umfasst.

4. Verfahren gemäß einem der Ansprüche 1 bis 3, **dadurch gekennzeichnet, dass** externe Mittel Speichermittel von geheimen kryptographischen Daten umfassen und dass jede Übertragung von geheimen kryptographischen Daten vor dem Speichern gesichert ist.

5. Verfahren gemäß einem der Ansprüche 1 bis 4, bei dem der Mikrokern und wenigstens zwei Peripheriegerätetreiber, die wenigstens zwei virtuelle Maschinen, in denen jeweils ein einziges Betriebssystem ausgeführt wird, bilden, wenigstens ein zusätzliches Zugangstor (11') eine Kommunikation zwischen den Betriebssystemen zulässt und die Konformität der genannten Kommunikationen im Vergleich zu Zugangssicherheitsregeln überprüft.

6. Verfahren gemäß irgendeinem der Ansprüche 1 bis 5, bei dem für jedes Betriebssystem in einem vorherigen Schritt eine Sicherheitspolitik in Form eines Zugangsregelsatzes für die Tore definiert ist, die mit dem genannten Betriebssystem in Beziehung stehen.

7. Verfahren gemäß Anspruch 6, bei dem die Zugangsregeln, die der Sicherheitspolitik des genannten Betriebssystems zugeordnet sind, den Zugangstoren vor dem Starten des genannten Betriebssystems geliefert werden.

8. Computerprogrammprodukt, umfassend Programmcodeanweisungen, die auf einem von einem Computer lesbaren Träger gespeichert sind, um die Stufen des Verfahrens gemäß irgendeinem der Ansprüche 1 bis 7 umzusetzen, wenn das genannte Programm auf einem Computer arbeitet.

9. Computer, umfassend:
- einen Mikrokern (3), umfassend einen Taktgebertreiber, einen Scheduler und eine Kommunikationsverwaltung zwischen Prozessen,
- wenigstens ein virtualisiertes Betriebssystem (7),
- eine Vielzahl von Peripheriegerätetreibern (5),
- Ressourcenverwaltungen
**dadurch gekennzeichnet, dass** er wenigstens ein Zugangstor (11) umfasst, das jedem Peripheriegerättreiber zugeordnet und mit dem virtualisierten Betriebssystem gekoppelt ist, um wenigstens eine virtuelle Maschine zu bilden, die dem virtualisierten Betriebssystem zugeordnet ist, das die Ausführung desselben zulässt,
wobei jedes der Zugangstore (11, 11') geeignet ist, um den Informationsstrom zu filtern, der jedem Peripheriegerättreiber (5) zugeordnet ist und ein virtuelles Periopheriegerät mit dem virtualisierten Betriebssystem in Kontakt bringt, indem es jede Kommunikation zwischen dem entsprechenden Peripheriegerättreiber und dem virtualisierten Betriebssystem abfängt und die genannte abgefangene Kommunikation nur dann überträgt, wenn die Zugangssicherheitsregeln zu jedem Peripheriegerätetreiber, die für jedes virtualisierte Betriebssystem spezifisch sind, von der genannten abgefangenen Kommunikation validiert werden, wobei es jedem virtualisierten Betriebssystem beim Starten nur erlaubt ist, mit den Toren zu kommunizieren, die dieses Betriebssystem als Client haben.

10. Computer gemäß Anspruch 9, **dadurch gekennzeichnet, dass** beim Starten jedes Betriebssystems ein Ladegerät in einer einzigen Datei der Sicherheitspolitik, die alle Konfigurationsdateien der Tore umfasst, die Tore sucht, die das genannte Betriebssystem als Client haben.

## Claims

1. A method for securing a computer including a microcore (3), at least one virtualised operating system (7), a plurality of peripheral drivers (5) and at least one access mediator (11) filtering the information stream associated with each peripheral driver (5) and exposing a virtual peripheral to said virtualised operating system, said microcore including a clock driver, a scheduler and an interprocess communication manager, at least one virtual machine, associated with each operating system, being formed by said core, resource managers, the peripheral drivers (5) and the access mediators (11), **characterised in that** the method includes, at the access mediators (11), the steps of:
- intercepting (20) any communication between one of the peripheral drivers and said virtualised operating system,
- checking (24) that the intercepted communication is in accordance with preset access rules for said virtualised operating system;
- transmitting (26) the intercepted communication to the recipient if the intercepted communication is in accordance with the preset access rules,
and **in that** each virtualised operating system is permitted, at start, to communicate only with the mediators which have this operating system as a client.

2. The method according to claim 1, **characterised in that** at start of each operating system, a loader searches, in a single security policy file comprising all the mediator configuration files, for the mediators which have said operating system as a client.

3. The method according to claim 1 or 2, **characterised in that** the computer including a plurality of virtualised operating systems each isolated on its virtual machine, the method includes a step of multiplexing, by one of the access mediators, the accesses by the virtualised operating systems to one of the peripheral drivers associated therewith.

4. The method according to one of claims 1 to 3, **characterised in that** external means include secret cryptographic data storage means and **in that** any secret cryptographic data transmission is secured before storage.

5. The method according to one of claims 1 to 4, wherein the microcore and at least two peripheral drivers forming at least two virtual machines in each of which a single operating system is run, at least one additional access mediator (11') allows a communication between the operating systems and checks for the conformity of said communications with respect to access security rules.

6. The method according to any of claims 1 to 5, wherein, for each operating system, in a prior step, a security policy is defined as a set of access rules for the mediators in relation with said operating system.

7. The method according to claim 6, wherein the access rules associated with the security policy of said operating system are provided to the access mediators before starting said operating system.

8. A computer program product comprising program code instructions recorded on a computer readable medium to implement the steps of the method according to any of claims 1 to 7 when said program runs on a computer.

9. A computer including:
- a microcore (3) including a clock driver, a scheduler and an interprocess communication manager,
- at least one virtualised operating system (7),
- a plurality of peripheral drivers (5);
- resource managers,
**characterised in that** it comprises at least one access mediator (11) associated with each peripheral driver and coupled to the virtualised operating system to form at least one virtual machine associated with each virtualised operating system enabling the same to be run,
each of the access mediators (11, 11') being adapted to filter the information stream associated with each peripheral driver (5) and exposing a virtual peripheral to the virtualised operating system by intercepting any communication between the corresponding peripheral driver and the virtualised operating system, and only transmit said intercepted communication if security rules for access to the peripheral driver which are specific to each virtualised operating system are validated by said intercepted communication, each virtualised operating system being permitted, at start, to communicate only with the mediators which have this operating system as a client.

10. The computer according to claim 9, **characterised in that** at start of each operating system, a loader searches, in a single security policy file comprising all the mediator configuration files, for the mediators which have said operating system as a client.
